# EUROPÄISCHE PATENTANMELDUNG

(11) **EP 1 612 954 A2**
(43) Veröffentlichungstag der Anmeldung: **04.01.2006**
(21) Anmeldenummer: 05105729.7
(22) Anmeldetag: 28.06.2005
(51) Int. Cl.: H04B 1/38, H01Q 1/12

(54) **Schienenfahrzeug mit einer Übertragungsstrecke für Daten und/oder Befehle**

(30) Priorität: 01.07.2004 DE 102004032015
(71) Anmelder: SIEMENS AKTIENGESELLSCHAFT, 80333 München (DE)
(72) Erfinder: Krauss, Bruno, 91315, Höchstadt (DE); Kröll, Johannes, 90587, Obermichelbach (DE); Krug, Friedrich, 91334, Hemhofen (DE)

(57) **Zusammenfassung**

Zur Übertragung von Informationen, Betriebsdaten und/oder Befehlen auf ein benachbartes Schienenfahrzeug auf dem gleichen Gleis oder auf ein benachbartes Zugteil des gleichen Zuges und mit einer stirnseitigen Beleuchtungs- und/oder Signaleinrichtung, wird eine Sende-/Empfangskomponente als Teil einer Übertragungsstrecke genutzt. Die Sende-/Empfangskomponente ist in einer ersten Variante bevorzugt in die Beleuchtungs- und/oder Signaleinrichtung integriert. In einer zweiten Variante ist die Sende-/Empfangskomponente an einer Fahrzeugstirnseite bevorzugt an unter oder in der Fahrzeugaußenhülle angebracht.

## Beschreibung

Die Erfindung liegt auf dem Gebiet von zwangsgeführten, insbesondere von schienengeführten Fahrzeugverbänden.

Die Erfindung betrifft gemäß einer ersten Variante ein Schienenfahrzeug mit einer Sende-/Empfangskomponente als Teil einer Übertragungsstrecke, zur Übertragung von Informationen, Betriebsdaten und/oder Befehlen auf ein benachbartes Schienenfahrzeug auf dem gleichen Gleis oder auf ein benachbartes Zugteil des gleichen Zuges und mit einer stirnseitigen Beleuchtungs- und/oder Signaleinrichtung, wobei die Sende-/Empfangskomponente in die Beleuchtungs- und/oder Signaleinrichtung integriert ist.

Die Erfindung betrifft gemäß einer zweiten Variante außerdem ein Schienenfahrzeug mit einer Sende-/Empfangskomponente als Teil einer Übertragungsstrecke zur Übertragung von Informationen, Betriebsdaten und/oder Befehlen auf ein benachbartes Schienenfahrzeug oder auf ein benachbartes Zugteil des gleichen Zuges, wobei die Sende-/Empfangskomponente an einer Fahrzeugstirnseite unter oder in der Fahrzeugaußenhülle angebracht ist.

Es ist bekannt, bei Schienenfahrzeugen zur Übertragung von Informationen und/oder Befehlen eine elektromechanische Steckkupplung zu verwenden. Diese Steckkupplung ist eine aufwendig konstruierte Steckverbindung mit zahlreichen einzelnen signalführenden Leitern (z.B. ca. 50), wobei die Einzelkontakte anfällig für Verschmutzung und Verschleiß sind. Bei Zugkupplungseinrichtungen oder Zugkupplungsvorgängen, wie sie im normalen Eisenbahnverkehr üblich sind, müssen solche elektromechanischen Steckkupplungen von Hand gekuppelt bzw. entkuppelt werden, welches äußert umständlich und oft unzuverlässig ist. Zudem verlangen Eisenbahnbetreiber in Zukunft die Übertragung einer erheblichen Anzahl von Informationen und Daten zu denen Audiosignale, Videosignale, Bussignale, Betriebsdaten und Betriebsbefehle gehören. Auch wird eine Übertragungsstrecke, die nicht von mechanischen Komponenten abhängig ist und bereits bei Annäherung der beiden Koppelpartner aufgebaut werden kann, gefordert.

Bei dem Einsatz von elektromechanischen Steckkupplungen kann die Kommunikation von einen Teilzug auf einen weiteren Teilzug erst mit dem endgültigen Abschließen des Kuppelvorgangs aufgebaut werden. Eine vor dem Kuppelkontakt aufgebaute Übertragungsstrecke oder Kommunikationsverbindung lässt den Austausch von wichtigen Betriebsdaten über den Koppelpartner wie Länge, Gewicht, Ladegut, Treibstoff-/Energie-Status, mögliche Schaden- und/oder Störmeldungen etc. zu. Sind diese Betriebsdaten beiden Koppelpartnern im Vorfeld bekannt, so lässt sich der Kuppelvorgang optimieren und die Abfertigungszeit verkürzen.

Durch den Einsatz moderner Datenübertragungsverfahren können alle Informationen und/oder Befehle über eine einzige Übertragungsstrecke übertragen werden. Aus der schweizer Patentschrift CH 676903 A5 ist ein Übertragungsverfahren und eine Übertragungsanordnung mit einer oder mehreren Hochfrequenz-übertragungsstrecken für Eisenbahnzüge bekannt.

Die in CH 676903 A5 offenbarte Hochfrequenzübertragungsanordnung hat bei Einsatz von den dort beschriebenen Antennenkomponenten jedoch den Nachteil, dass diese Sende-/Empfangskomponenten für den Hochgeschwindigkeitsverkehr nicht geeignet sind.

Aus JP-A-08332953 ist eine Datenübertragungsstrecke zwischen zwei Schienenfahrzeugen mittels optoelektronischer Bauteile bekannt.

Aus der deutschen Offenlegungsschrift DE 21 14 621 ist ein Verfahren und eine Anordnung zur Brems- und Fahrsteuerung von Objekten, bezogen auf Schienenfahrzeuge, bekannt.

Weiterhin wird in einer deutschen Offenlegungsschrift DE 196 28 125 A1 eine aktive Empfangsantenne beschrieben, welche in die metallische Fahrzeugskarosserie eingebracht ist.

Aufgabe der vorliegenden Erfindung ist es, ein Schienenfahrzeug mit für den Hochgeschwindigkeitsverkehr geeigneter Sende-/Empfangskomponente anzugeben, die wartungsfreundlich ist.

Diese Aufgabe wird bei einem Schienenfahrzeug der eingangs genannten ersten Variante erfindungsgemäß dadurch gelöst, dass die Sende-/Empfangskomponente als Hochfrequenz-Funkantenne ausgebildet ist und dass die Hochfrequenz-Funkantenne in einer Streu und/oder Abdeckscheibe der Beleuchtungs-und/oder Signaleinrichtung integriert ist. Der mit der Erfindung erzielte Vorteil besteht darin, dass die Fahrzeugaußenkontur ganz oder weitestgehend unverändert bleibt. Die Außenhaut kann somit glatt und frei von zusätzlichen konstruktiven Erhebungen sein. Dies ist für moderne und zukunftsweisende Hochgeschwindigkeitszüge aus aerodynamischen Geschichtspunkten sehr vorteilhaft, denn je besser die aerodynamische Ausprägung der Fahrzeugfront, desto mehr Energie kann für den Antrieb gespart werden. Damit wird auch bei automatischer Reinigung ein sauberes Außenbild erzeugt.

Zusätzlich hat die Erfindung den Vorteil, dass z.B. bei Wartungs- bzw. Abstimmarbeiten oder bei Austausch von Sende-/Empfangskomponenten über die bereits vorhandenen Einbauplätze der Beleuchtungseinrichtungen der einfache Zugriff auf die Sende-/Empfangskomponente ermöglicht wird.

Die eingangs genannte Aufgabe wird bei einem Schienenfahrzeug der eingangs genannten zweiten Variante gemäß der Erfindung gelöst dadurch, dass die Sende-/Empfangskomponente als Hochfrequenz-Funkantenne ausgebildet, und dass die Hochfrequenz-Funkantenne in einer Gummidichtung der Windschutzscheibe integriert ist. Hieraus ergeben sich die gleichen Vorteile wie bei der ersten Variante.

Beiden Varianten gemeinsam ist der Vorteil, dass die Sende-/Empfangskomponente bei einem Defekt oder ähnlichem einfach austauschbar ist.

Vorzugsweise ist die Sende-/Empfangskomponente flächig oder flach ausgebildet, z.B. als dünne Mikrostreifen- oder Planarantenne.

Vorzugsweise ist die Sende-/Empfangskomponente für den Bereich von 20 GHz bis 70 GHz, insbesondere von 30 GHz bis 70 GHz, hergerichtet. Das von den Erfindern anvisierte hohe Datenaufkommen und die zunehmende Datenmenge verlangen eine Übertragungsstrecke, die für hohe Datenmengen und Geschwindigkeiten und damit für hohe Frequenzen ausgelegt ist. Der in CH 676903 A5 beanspruchte Frequenzbereich von 1 bis 20 GHz für ein Übertragungsverfahren und eine Übertragungsanordnung ist für zukünftige Übertragungsverfahren nicht mehr ausreichend. Die erfindungsgemäße Übertragungseinrichtung hat u.a. den Vorteil, dass eine Vielzahl der zu übertragenden Signale mit der daraus resultierenden Bandbreite übertragen werden kann.

Zweckmäßig ist es, mindestens eine weitere Übertragungsstrecke zwischen den Fahrzeugen in Längsrichtung anzuordnen. Durch die redundante Auslegung der Sende-/Empfangskomponenten wird die Übertragungssicherheit erhöht.

Im Fall von zwei Übertragungsstrecken sind die Sende-/Empfangskomponenten in einer bevorzugten Ausführungsform in einem Abstand von null bis zu einem Abstand der halben Fahrzeugbreite links bzw. rechts der vertikalen Symmetrieebene angeordnet. Dies hat insbesondere bei nicht schienengebundenen, aber dennoch zwangsgeführten Fahrzeugverbänden den Vorteil einer Fahrspurüberwachung. D.h., das Verlassen eines Fahrzeuges aus dem Verband kann erkannt werden und es kann durch Eingriff auf seine Sollposition zurückgebracht werden.

Im Folgenden wird die Erfindung anhand mehrerer Ausführungsbeispiele unter Bezugnahme auf die Zeichnung näher erläutert.

Es zeigen:
- FIG 1: eine prinzipielle Darstellung der erfindungsgemäßen Integration von Sende-/Empfangskomponenten in ein Schienenfahrzeug;
- FIG 2: eine Prinzipdarstellung einer Beleuchtungseinrichtung des Schienenfahrzeugs der Figur 1.

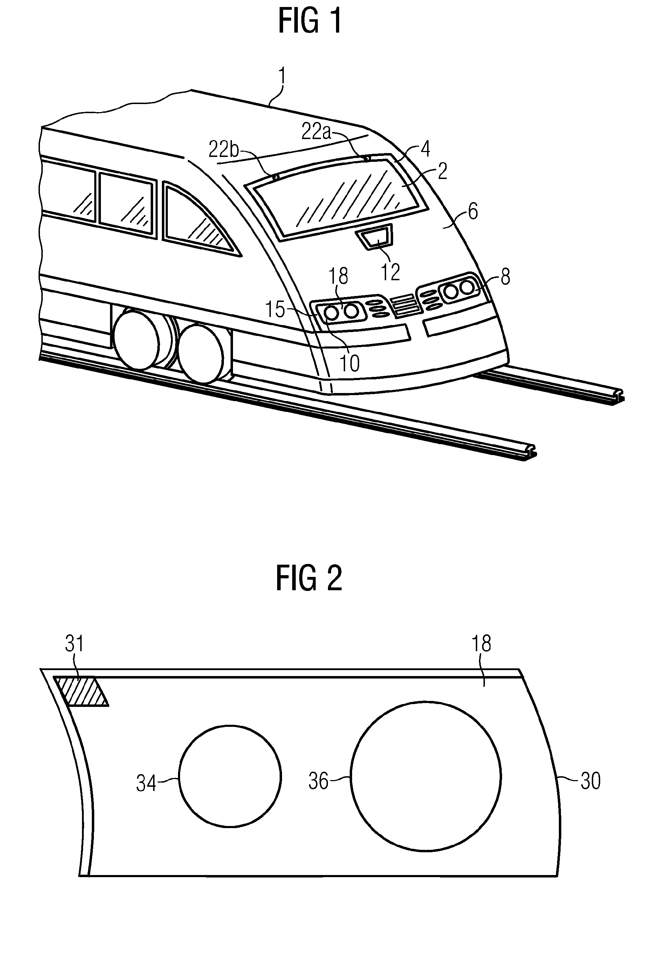

Figur 1 zeigt in einer Prinzipdarstellung die Stirnseite eines Schienenfahrzeuges 1. Es sind zwei Ausführungsbeispiele in einer Figur angegeben.

In einem ersten Ausführungsbeispiel sind Sende-/Empfangskomponenten in eine Beleuchtungseinrichtung des Schienenfahrzeugs 1 integriert. Figur 2 zeigt dies im Detail. In der Beleuchtungseinrichtung umfassend eine Linke-Signalleuchte 8, eine Rechte-Signalleuchte 10 und eine Mitten-Signalleuchte 12 ist jeweils im Inneren einer Abdeckscheibe 18 ein Antennenelement 31 integriert. Dieses Antennenelement 31 ist durch die Integration in die Abdeckscheibe optimal gegen Witterungseinflüsse geschützt. Ein Ausbau bzw. eine Wartung der Sende-/Empfangskomponenten ist bei der Integration in die Abdeckscheibe 18 besonders einfach, denn die Abdeckscheibe 18 kann leicht aus einem Lampeneinsatzrahmen 15 heraus genommen werden und ersetzt werden.

Ein zweites Ausführungsbeispiel zeigt die Integration in eine Gummidichtung 4 der Windschutzscheibe 2, welche mit der Fahrzeugaußenhülle 6 abschließt. Zwei zylindrische Antennenelemente 22a, 22b sind rechts und links im oberen Dichtungsband der Gummidichtung 4 angeordnet.

In Figur 2 ist ein Lampeneinsatz 30 mit einem kleinen Reflektor 34 und einem großen Reflektor 36 der Linken-Signalleuchte 8 der Beleuchtungseinrichtung dargestellt. Anhand dieser Prinzipdarstellung wird die Integrationsmöglichkeit des Antennenelementes 31 aufgezeigt.

In der Abdeckscheibe 18 des Lampeneinsatzes 30, oder auch in einer Streuscheibe, ist ein eingebrachtes Antennenelement 31 im Randbereich der Beleuchtungseinrichtung bzw. der Abdeckscheibe 18 angeordnet. Das Antennenelement 31 ist z.B. aufgeklebt oder vergossen.

Nicht dargestellt sind wiederum ein - alternativ - auf die Abdeckscheibe 18 aufgedampftes Antennenelement oder in die Abdeckscheibe 18 eingebrachte feine Antennendrähte.

## Patentansprüche

1. Schienenfahrzeug (1) mit einer Sende-/Empfangskomponente als Teil einer Übertragungsstrecke zur Übertragung von Informationen, Betriebsdaten und/oder Befehlen auf ein benachbartes Schienenfahrzeug oder auf ein benachbartes Zugteil des gleichen Zuges und mit einer stirnseitigen Beleuchtungs- und/oder Signaleinrichtung, wobei die Sende-/Empfangskomponente in die Beleuchtungs- und/oder Signaleinrichtung integriert ist,
**dadurch gekennzeichnet, dass** die Sende-/Empfangskomponente als Hochfrequenz-Funkantenne ausgebildet ist, und dass die Hochfreqneuz-Funkantenne (31) in einer Streu- und/oder Abdeckscheibe (18) der Beleuchtungs- und/oder Signaleinrichtung integriert ist.

2. Schienenfahrzeug (1) mit einer Sende-/Empfangskomponente als Teil einer Übertragungsstrecke zur Übertragung von Informationen, Betriebsdaten und/oder Befehlen auf ein benachbartes Schienenfahrzeug oder auf ein benachbartes Zugteil des gleichen Zuges, wobei die Sende-/Empfangskomponente an einer Fahrzeugstirnseite unter oder in der Fahrzeugaußenhülle (6) angebracht ist,
**dadurch gekennzeichnet, dass** die Sende-/Empfangskomponente als Hochfrequenz-Funkantenne (22a,22b) ausgebildet ist, und dass die Hochfrequenz-Funkantenne in einer Gummidichtung (4) der Windschutzscheibe (2) integriert ist.

3. Schienenfahrzeug (1) nach Anspruch 1 oder 2,
**dadurch gekennzeichnet, dass** die Sende-/Empfangskomponente flächig oder flach ausgebildet ist.

4. Schienenfahrzeug (1) nach einem der Ansprüche 1 bis 3,
**dadurch gekennzeichnet, dass** die Sende-/Empfangskomponente für den Bereich von 20 GHz bis 70 GHz hergerichtet ist.

5. Schienenfahrzeug (1) nach einem der Ansprüche 1 bis 4,
**dadurch gekennzeichnet, dass** zwischen den Fahrzeugen in Längsrichtung mindestens eine weitere Übertragungsstrecke existiert.

6. Schienenfahrzeug (1) nach Anspruch 5,
**dadurch gekennzeichnet, dass** sich die Sende- und Empfangskomponenten im Fall von zwei Übertragungsstrecken in einem Abstand von null bis zu einem Abstand der halben Fahrzeugbreite links bzw. rechts der vertikalen Symmetrieebene befinden.
